# EUROPÄISCHE PATENTANMELDUNG

(11) **EP 2 657 158 A1**
(43) Veröffentlichungstag der Anmeldung: **30.10.2013**
(21) Anmeldenummer: 13164903.0
(22) Anmeldetag: 23.04.2013
(51) Int. Cl.: B65G 25/12

(54) **Werkstückträger, Mitnehmersystem und Werkstücktransportvorrichtung**

(30) Priorität: 23.04.2012 DE 102012103557
(71) Anmelder: PHOENIX CONTACT GmbH & Co. KG, 32825 Blomberg (DE)
(72) Erfinder: Grabbe, Wilhelm, 32657 Lemgo (DE)
(74) Vertreter: Michalski Hüttermann & Partner Patentanwälte

(57) **Zusammenfassung**

Die Erfindung betrifft einen Werkstückträger (12) für eine Werkstücktransportvorrichtung (10), der mittels eines Mitnehmers (28, 30) von einem Vorschubantrieb (14) der Werkstücktransportvorrichtung (10) auf einer Führungsbahn (16) in Transportrichtung bewegbar ist, wobei der Werkstückträger (12) eine quer zur Transportrichtung verlaufende nutartige Mitnehmeraufnahme (24) aufweist, in die der Mitnehmer (28, 30) zur Bildung eines in Transportrichtung formschlüssigen Eingriffs quer zur Transportrichtung einbringbar ist, wobei sich die Kontur der Mitnehmeraufnahme (24) in zumindest einem Abschnitt (62, 64) in Einbringrichtung verjüngt. Es ist vorgesehen, dass die Mitnehmeraufnahme (24) in einem Schlitten (54) ausgebildet ist, der in oder an einer Aufnahmevorrichtung (48) des Werkstückträgers (12) entlang einer quer zur Transportrichtung verlaufenden Achse (26) linear verfahrbar gelagert ist, wobei der Werkstückträger (12) weiterhin ein Rückstellelement aufweist, das eine der Einbringrichtung des Mitnehmers (28, 30) entgegengesetzte Rückstellkraft auf den Schlitten (54) ausübt.

Die Erfindung betrifft weiterhin eine entsprechende Werkstücktransportvorrichtung.

## Beschreibung

Die Erfindung betrifft einen Werkstückträger für eine Werkstücktransportvorrichtung, der mittels eines Mitnehmers von einem Vorschubantrieb der Werkstücktransportvorrichtung auf einer Führungsbahn in Transportrichtung bewegbar ist, wobei der Werkstückträger eine quer zur Transportrichtung verlaufende nutartige Mitnehmeraufnahme aufweist, in die der Mitnehmer zur Bildung eines in Transportrichtung formschlüssigen Eingriffs quer zur Transportrichtung einbringbar ist. Die Kontur der Mitnehmeraufnahme verjüngt sich dabei in zumindest einem Abschnitt in Einbringrichtung. Die Erfindung betrifft weiterhin ein Mitnehmersystem für eine Werkstücktransportvorrichtung, wobei das Mitnehmersystem einen von einem Vorschubantrieb der Werkstücktransportvorrichtung antreibbaren Mitnehmer und einen Werkstückträger aufweist. Die Erfindung betrifft schließlich noch eine entsprechende Werkstücktransportvorrichtung.

Eine derartige Werkstücktransportvorrichtung mit Mitnehmersystem und Werkstückträgern ist aus der DE 10 2004 041 974 A1 bekannt. Diese zeigt eine Werkstücktransportvorrichtung mit taktweise entlang von Bearbeitungsstationen geförderten Werkstückträgern, die auf einer geradlinig sich erstreckenden Führungsbahn angeordnet sind, und mit einem Vorschubantrieb für die Werkstückträger. Dabei weisen die Werkstückträger quer zur Transportrichtung offene Mitnehmeraufnahmen auf. Der Vorschubantrieb weist seinerseits Mitnehmer auf, die darin in der Transportrichtung formschlüssig in Eingriff bringbar sind. Diese Mitnehmer sind in zwei Reihen jeweils in der Transportrichtung fluchtend hintereinander angeordnet. Dabei bilden die Mitnehmeraufnahme des Werkstückträgers und der Mitnehmer des Vorschubantriebs den Kern des Mitnehmersystems. Die Kontur der nutartigen Mitnehmeraufnahme verjüngt sich in zumindest einem Abschnitt in Einschwenkrichtung, indem ein Einsatzteil in einen Aufnahmeschlitz eingelassen ist, der die Kontur der Mitnehmeraufnahme zusammen mit diesem Einsatzteil bildendet.

Derartige Mitnehmersysteme weisen bedingt durch den Eingriff mehr oder weniger Spiel zwischen der Mitnehmeraufnahme und dem in die Mitnehmeraufnahme eingebrachten Mitnehmer auf. Dies gilt allgemein für fast alle Systeme, bei denen ein Formschluss mit Hilfe eines Aktors hergestellt wird. Um eine hinreichende Genauigkeit zu erreichen, werden zur Fixierung der Werkstückträger in den Bearbeitungsstationen vielfach Indexiersysteme verwendet. Insbesondere in schnell taktenden Systemen geht durch die erforderlich Indexierung in den Bearbeitungsstationen Bearbeitungszeit verloren. Darüber hinaus können Indexierungen bei frei programmierbaren Systemen im Allgemeinen nicht verwendet werden.

Der Erfindung liegt die Aufgabe zu Grunde, einen Werkstückträger, ein Mitnehmersystem und eine Werkstücktransportvorrichtung anzugeben, bei denen das Spiel ohne Zeitverlust verringerbar ist beziehungsweise verringert wird.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Bei dem erfindungsgemäßen Werkstückträger ist vorgesehen, dass dieser einen Schlitten und zumindest ein Rückstellelement aufweist, wobei der Schlitten werkstückträgerintern entlang einer quer zur Transportrichtung verlaufenden Achse linear verfahrbar gelagert ist und die Mitnehmeraufnahme ausbildet und das Rückstellelement eine der Einbringrichtung des Mitnehmers entgegengesetzte Rückstellkraft auf den Schlitten ausübt.

Dies hat den Vorteil, dass ein solcher Werkstückträger zusammen mit einem Mitnehmer (einem Mitnehmerelement) in einem Mitnehmersystem beziehungsweise in einer Werkstücktransportvorrichtung verwendet werden kann, bei denen der Mitnehmer (oder zumindest dessen in den formschlüssigen Eingriff bringbarer Teil) ein Außenmaß in Transportrichtung aufweist, das größer ist, als die Breite der Kontur an der engsten Stelle ihrer Verjüngung. Die Verjüngung bildet dabei eine Auflaufstruktur, die bis zum Auflaufen auf den Teil der sich verjüngenden Kontur, der schmaler ist als der in formschlüssigen Eingriff bringbare Teil des Mitnehmers, ein Zentrieren des Werkstückträgers bewirkt. Gleichzeitig liegt der Mitnehmer in Transportrichtung formschlüssig und spielfrei an der Kontur an und wird durch die Rückstellkraft des Rückstellelements in dieser Position gehalten.

Gemäß einer bevorzugten Ausführungsform der Erfindung ist vorgesehen, dass der Werkstückträger ein weiteres auf den Schlitten wirkendes Rückstellelement aufweist, das dem einen Rückstellelement axial entgegenwirkt. Diese einander entgegenwirkenden Rückstellelemente halten den Schlitten in einer stabilen Position innerhalb des Werkstückträgers. Aus dieser Position kann der Schlitten in beide Richtungen axial ausgelenkt werden.

Insbesondere ist vorgesehen, dass das eine Rückstellelement und/oder das andere Rückstellelement ein Federelement, insbesondere ein als Druckfeder ausgebildetes Federelement, ist. Mittels eines Federelements lässt sich ein Rückstellelement besonders einfach realisieren.

Gemäß einer weiteren bevorzugten Ausführungsform der Erfindung ist vorgesehen, dass die Verjüngung der Kontur der Mitnehmeraufnahme eine kontinuierlich verlaufende Verjüngung ist. Diese kontinuierliche Verjüngung bildet eine Auflaufschräge oder zwei gegenläufige Auflaufschrägen der Auflaufstruktur.

Mit Vorteil ist vorgesehen, dass die Kontur der Mitnehmeraufnahme zwei Abschnitte mit gegenläufigen Verjüngungen aufweist. Ein derartiger Werkstückträger ist insbesondere für die Verwendung in einer Werkstücktransportvorrichtung geeignet, bei der die Mitnehmer des Vorschubantriebs in zwei Reihen jeweils in der Transportrichtung fluchtend hintereinander angeordnet sind. Die Mitnehmer der unterschiedlichen Reihen werden aus einander entgegengesetzten Richtungen in die Aufnahmen eingebracht.

Bevorzugt ist die engste Stelle der Kontur in einem Mittelabschnitt der Mitnehmeraufnahme ausgebildet. Insbesondere ist die gesamte Kontur dabei spiegelsymmetrisch ausgebildet.

Gemäß noch einer weiteren bevorzugten Ausführungsform der Erfindung ist das Einbringen des Mitnehmers in die Mitnehmeraufnahme ein Einschwenken.

Bei dem erfindungsgemäßen Mitnehmersystem mit Mitnehmer und Werkstückträger ist vorgesehen, dass der Werkstückträger als ein vorstehend genannter Werkstückträger ausgebildet ist.

Dabei ist insbesondere vorgesehen, dass die Kontur der Mitnehmeraufnahme an der engsten Stelle ihrer Verjüngung schmaler ist, als der in den formschlüssigen Eingriff bringbare Teil des Mitnehmers.

Die erfindungsgemäße Werkstücktransportvorrichtung weist mindestens ein vorstehend genanntes Mitnehmersystem mit Mitnehmer und Werkstückträger auf.

Gemäß einer bevorzugten Ausgestaltung der Erfindung ist vorgesehen, dass die Mitnehmer des Vorschubantriebs in zwei Mitnehmerreihen jeweils in der Transportrichtung fluchtend hintereinander angeordnet sind.

Insbesondere sind die beiden Mitnehmerreihen zum einen quer zur Transportrichtung für einen einander abwechselnden Eingriff ihrer Mitnehmer in die Mitnehmeraufnahmen der Werkstückträger beweglich und zum anderen entweder in der Eingriffslage ihrer Mitnehmer in der Transportrichtung oder in der Position außer Eingriff ihrer Mitnehmer von den Mitnehmeraufnahmen der Werkstückträger entgegen der Transportrichtung jeweils um eine gleiche Weglänge verfahrbar.

Gemäß einer weiteren bevorzugten Ausgestaltung der Erfindung ist vorgesehen, dass der Abstand der Mitnehmer in den Mitnehmerreihen größer ist als die Länge der Werkstückträger.

Nachfolgend wird die Erfindung unter Bezugnahme auf die anliegenden Zeichnungen anhand von einer bevorzugten Ausführungsform näher erläutert.

Es zeigen
- Fig. 1: eine perspektivische Ansicht einer Werkstücktransportvorrichtung mit Werkstückträger, Vorschubantrieb und Führungsbahn,
- Fig. 2: den Werkstückträger der Fig. 1 in einer Ansicht von schräg unten,
- Fig. 3: eine Draufsicht auf die Unterseite des in den Figuren 1 und 2 gezeigten Werkstückträgers und
- Fig. 4: einen Vorschubantrieb und einen Werkstückträger einer Werkstücktransportvorrichtung gemäß einer bevorzugten Ausführungsform der Erfindung.

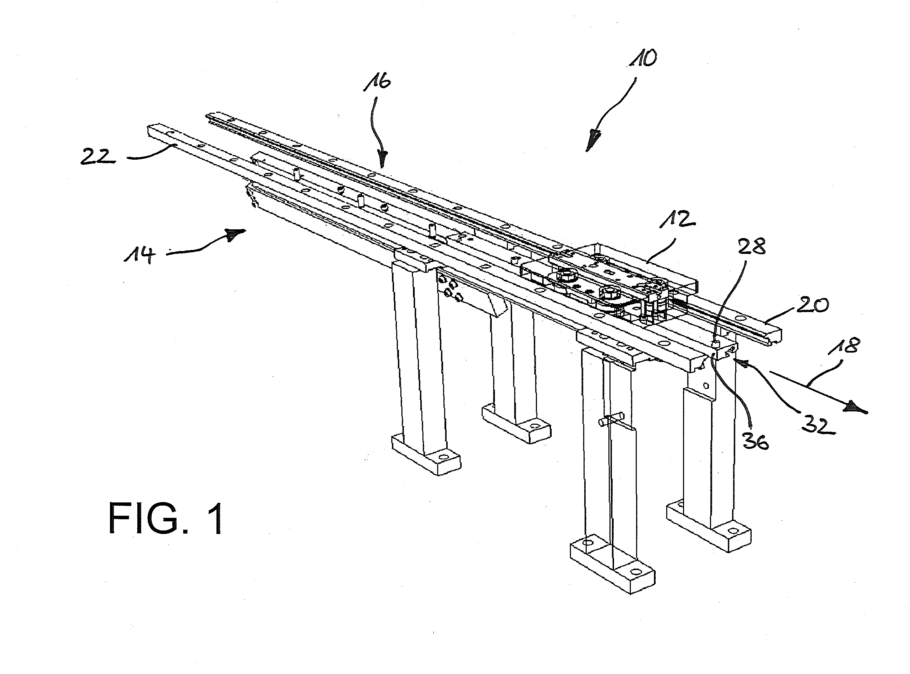

Die Fig. 1 zeigt eine Werkstücktransportvorrichtung 10 mit einem Werkstückträger 12, einem Vorschubantrieb 14 und einer Führungsbahn 16 in einer Ansicht von schräg oben. Da die Werkstücktransportvorrichtung 10 im Allgemeinen mehrere Werkstückträger 12 fördert, soll im Weiteren von mehreren Werkstückträgern 12 die Rede sein, auch wenn in Fig. 1 nur ein Werkstückträger 12 gezeigt ist.

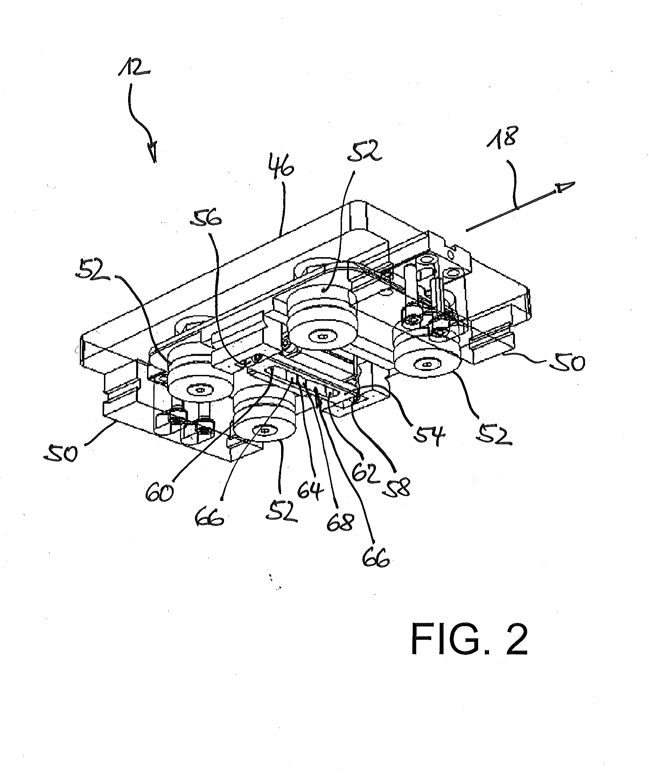

Die Werkstückträger 12 werden in ununterbrochener Folge auf der Führungsbahn 16 befördert, wobei die Werkstückträger 12 mit im Wesentlichen gleichbleibenden Lücken zwischen sich aufeinanderfolgen. Die Führungsbahn 16 gliedert sich in zwei Bahnabschnitte, die sich quer zur Transportrichtung (Pfeil 18) gegenüberliegen. Diese Bahnabschnitte sind durch zwei Führungsschienen 20, 22 gebildet, deren einander gegenüberliegende Innenseiten die Führung der Werkstückträger 12 übernehmen. Die Werkstückträger 12 weisen dazu an ihren Längsseiten eine Führungskontur auf, deren Einzelheiten sich aus Fig. 2 ergeben.

Beim dargestellten Ausführungsbeispiel sind die beiden Führungsschienen 20, 22 höhengleich angeordnet, dementsprechend liegen die beiden Abschnitte der Führungsbahn 16 auf demselben Niveau.

Unterhalb der Führungsbahn 16 ist der Vorschubantrieb 14 angeordnet.

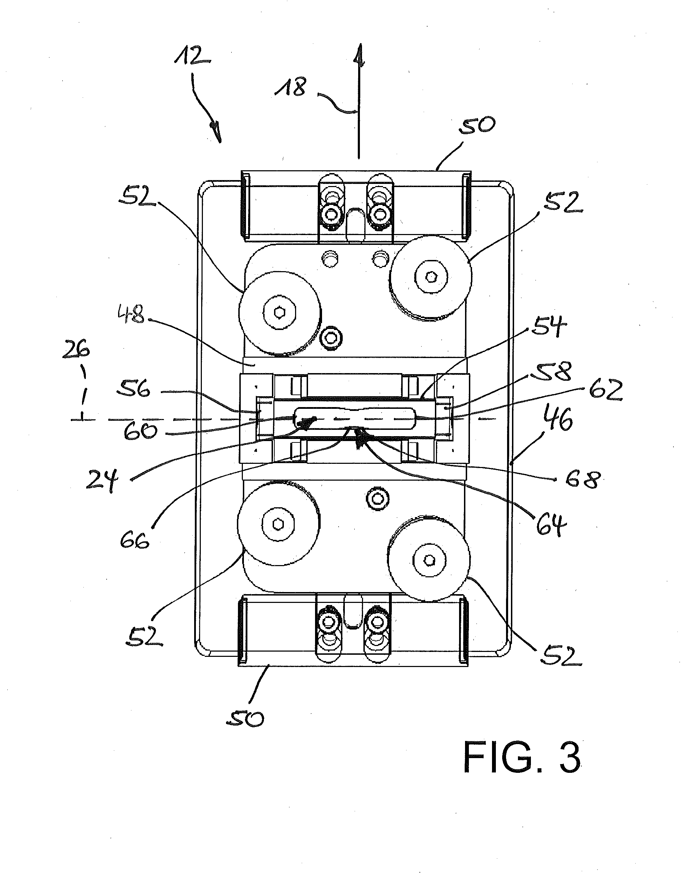

An der Unterseite des Werkstückträgers 12 ist eine in den Figuren 2 und 3 deutlich erkennbare Mitnehmeraufnahmen 24 vorhanden, die als nut- oder schlitzartige Ausnehmung ausgebildet ist und deren Längsachse 26 sich quer zur Transportrichtung erstreckt. In diese Mitnehmeraufnahme 24 können die Mitnehmer 28, 30 aus zwei Gruppen von Mitnehmern des Vorschubantriebs 14 von einander gegenüberliegenden Seiten kommend quer zur Transportrichtung (Pfeil 18) wechselweise eingreifen.

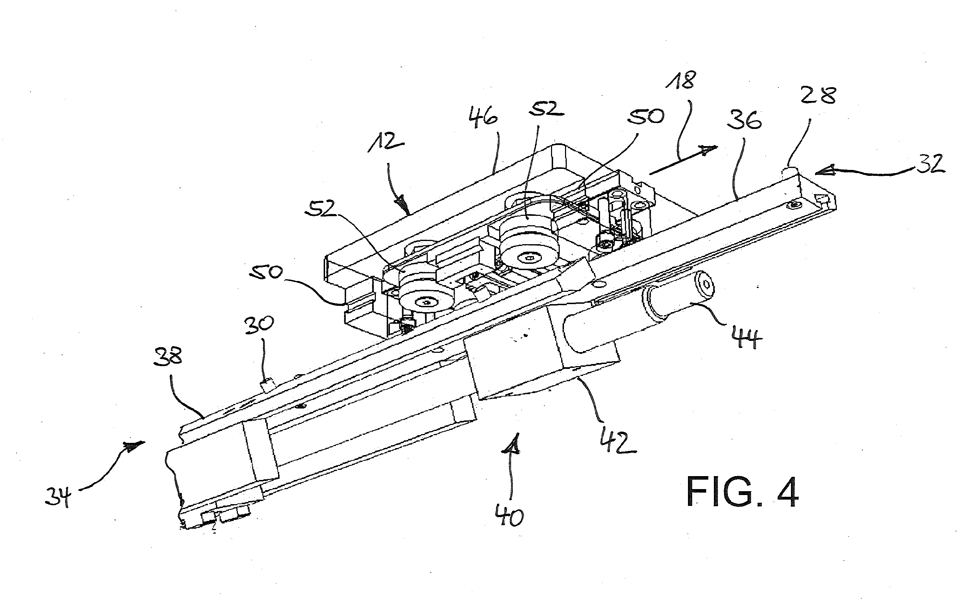

Sowohl die einen Mitnehmer 28 als auch die anderen Mitnehmer 30 sind je in einer Reihe (Mitnehmerreihe) 32, 34 in Transportrichtung bzw. parallel dazu angeordnet. Nur die Reihe 32 mit den Mitnehmern 28 ist in der Fig. 1 erkennbar. In Fig. 4 sind jedoch beide Reihen 32, 34 sowie weitere Teile des Vorschubantriebs 14 gut erkennbar.

Da jede dieser Reihen 32, 34 je nach der Länge der Transportstrecke eine unterschiedliche Anzahl von Mitnehmern 28 oder 30 aufweisen kann, sind die Mitnehmerreihen 32, 34 unterschiedlich bezeichnet.

Mit sämtlichen Werkstückträgern 12 steht jeweils nur eine der Mitnehmerreihen 32, 34 in Eingriff, und zwar diejenige, die - wie nachstehend noch erläutert werden wird - sich in der Transportrichtung (Pfeil 18) bewegt.

In der Darstellung der Fig. 1 sind dies die Mitnehmer 28 der Reihe 32. Die zweite Mitnehmerreihe 34 wird gleichzeitig entgegen der Transportrichtung verfahren. Da der Vorschub der Werkstückträger 12 intermittierend erfolgt, wechselt während des Stillstandes der Werkstückträger 12 der Mitnehmereingriff, es werden die Mitnehmer 28 aus den Mitnehmeraufnahmen 24 der Werkstückträger 12 heraus- und gleichzeitig werden die Mitnehmer 30 in die Mitnehmeraufnahmen 24 eingebracht. Dies ist zweckmäßigerweise so eingerichtet, dass die Mitnehmer 30 bereits in Eingriff mit den Mitnehmeraufnahmen 24 stehen, solange die Mitnehmer 28 aus den Mitnehmeraufnahmen 24 der Werkstückträger 12 noch nicht herausgebracht sind. So bleiben die Werkstückträger 12 nicht unkontrolliert sich selbst überlassen, und man benötigt für ihre exakte Positionierung während des Stillstandes nicht noch zusätzliche Arretiervorrichtungen. Das Ein- und Ausbringen der Mitnehmer 28, 30 erfolgt hierbei durch ein Ein- und Ausschwenken.

Nachdem die Mitnehmer 28 außer Eingriff mit den Mitnehmeraufnahmen 24 der Werkstückträger 12 sind, wird die Mitnehmerreihe 34 in Vorschubrichtung verfahren, und es fährt zu gleicher Zeit die Mitnehmerreihe 32 in ihre Ausgangslage zur Mitnahme der Werkstückträger 12 zurück. Entsprechend umgekehrt spielt sich der Vorgang ab, wenn die Mitnehmer 30 der Mitnehmerreihe 34 außer Eingriff mit den Mitnehmeraufnahmen 24 der Werkstückträger 12 gebracht werden und die Mitnehmer 28 der Mitnehmerreihe 32 in Eingriff mit den Mitnehmeraufnahmen 24 kommen.

Die Mitnehmer 28 der Reihe 32 sind auf einer Mitnehmerleiste 36 angeordnet, in gleicher Weise finden sich die Mitnehmer 30 der Reihe 34 auf einer weiteren Mitnehmerleiste 38. Die Mitnehmer 28, 30 sind an den Mitnehmerleisten 36, 38 als nach oben vorstehende Zapfen ausgebildet. Diese können zylindrisch oder auch leicht konisch ausgebildet sein. Für den Eingriff in die Mitnehmeraufnahmen 24 der Werkstückträger 12 werden die Mitnehmer 28, 30 entlang einer Kreisbahn bewegt, deren Radialebene quer zur Transportrichtung (Pfeil 18) steht. Es versteht sich, dass in Richtung dieser Kreisbahn, im wesentlichen also quer zur Transportrichtung, die unterseitigen Mitnehmeraufnahmen 24 an den Werkstückträgern 12 beidendig offen sind. So können die Mitnehmer 28, 30 einander abwechselnd von unterschiedlichen Seiten in die Mitnehmeraufnahmen 24 der Werkstückträger 12 eintauchen. Dies setzt weiter voraus, dass die Teilung der Mitnehmer 28 der Mitnehmerreihe 32 und die der Mitnehmer 30 der Mitnehmerreihe 34 gleich ist, und der Abstand der Mitnehmeraufnahmen 24 unterseitig an den Werkstückträgern 12 entspricht dieser Teilung.

Anders als beim dargestellten Ausführungsbeispiel können die Mitnehmer 28, 32 auch als im Querschnitt quadratische Stifte oder im Querschnitt rechteckige Stege ausgebildet sein, die in gleicher Weise wie die zapfenförmigen Mitnehmer 28, 30 entlang einer Kreisbahn bewegt werden. Um einerseits ein enges Spiel zwischen den Mitnehmern 28, 30 und den schlitz- oder nutförmigen Mitnehmeraufnahmen 24 an den Werkstückträgern 12 zu realisieren, aber andererseits die Einführung der Mitnehmer 28, 30 in die Mitnehmeraufnahmen 24 zu erleichtern, können die Mitnehmer 28, 30 sich zu ihrer in Eingriffsrichtung vorn liegenden Seite verjüngen und auch ballige Längsseiten aufweisen, an deren Scheitelbereiche die Nut- bzw. Schlitzweite der Mitnehmeraufnahmen 24 an den Werkstückträgern 1 angepasst ist.

Die Mitnehmerleisten 36, 38 sind mit einem gemeinsamen Schwenkantrieb verbunden, um die Mitnehmerreihen 32, 34 in der vorstehend beschriebenen Weise entlang einer Kreisbahn quer zur Transportrichtung zu verschwenken. Dazu sind die Mitnehmerleisten 36, 38 mittels Führungsblöcken 42 auf einer Schwenkwelle 44 angeordnet, wobei die Führungsblöcke 42 auf der Schwenkwelle 44 drehfest gehalten werden, jedoch axial verschieblich sind. Die Schwenkwelle 44 wird alternierend in beiden Schwenkrichtungen von einem Drehantrieb (nicht gezeigt) des Vorschubantriebs 14 angetrieben. Für weite Details des Vorschubantriebs 14 wird auf die DE 10 2004 041 974 A1 verwiesen.

Die Fig. 2 zeigt den bereits in Fig. 1 gezeigten Werkstückträger 12 in einer semitransparenten Ansicht von schräg unten, bei der die Ausbildung der Mitnehmeraufnahme 24 gut erkennbar ist.

Der Werkstückträger 12 weist einen Grundkörper 46, eine Aufnahmevorrichtung 48, Führungselemente 50 und Rollen 52 auf. Der Grundkörper 46 ist als Grundplatte ausgebildet, der im gezeigten Beispiel zur Abdeckung der Führungsbahn dient. In einer nicht dargestellten Alternative ist jedoch denkbar, dass das zu transportierende Werkstück auf dieser Grundplatte angeordnet werden kann. Im gezeigten Beispiel ist hingegen vorgesehen, dass die Aufnahme des Werkstückes durch eine nicht näher gekennzeichnete (in Fig. 4 rechts am Werkstückträger 12 dargestellte) Leiste erreicht wird, die mittels Formschluss mechanisch mit der Aufnahmevorrichtung 48 verbunden ist.

Die Rollen 52 bilden die oben genannten Führungsstrukturen aus. Die Elemente 50 dienen zum Schutz der Rollen beim Rücktransport des Werkstückträgers 12. Die Rollen 52 sorgen für eine hinreichend niedrige Reibung beim Transport des Trägers 12 über die Bahn 16. Alternativ zu dieser Rollenführung kann der Werkstückträger 12 auch eine Gleitführung mit niedrigem Reibwert aufweisen. Die an der Unterseite des Grundkörpers 46 angeordnete Aufnahmevorrichtung 48 weist einen entlang einer quer zur Transportrichtung verlaufenden Achse linear verfahrbar gelagerten Schlitten 54 auf. Dieser Schlitten 54 ist in axialer Ausrichtung zwischen zwei als Druckfedern ausgebildeten Rückstellelementen 56, 58 angeordnet und in dieser axialen Ausrichtung über diese einander entgegenwirkende Rückstellelemente 56, 58 in einer stabilen Position innerhalb der Aufnahmevorrichtung 48 beziehungsweise innerhalb des Werkstückträgers 12 gehalten.

Im Schlitten 54 ist die Mitnehmeraufnahme 24 des Werkstückträgers 12 ausgebildet. Dabei fallen die Längsachse 26 der Mitnehmeraufnahme 24 und die axiale Ausrichtung der Lagerung des Schlittens 54 im gezeigten Beispiel aufeinander. Beide liegen senkrecht zur Transportrichtung (Pfeil 18).

Die Fig. 3 zeigt die Unterseite eines Werkstückträgers 10 der Werkstücktransportvorrichtung 12. In dieser Darstellung ist die Kontur der Mitnehmeraufnahme 24 besonders deutlich erkennbar. Diese Kontur ist in den jeweiligen Endbereichen 60, 62 der Mitnehmeraufnahme 24 breiter und verjüngt sich jeweils in Richtung einer engsten Stelle 64 in einem Mittelabschnitt kontinuierlich. Mit anderen Worten weist die Kontur der Mitnehmeraufnahme 24 zwei Abschnitte 66, 68 mit gegenläufigen Verjüngungen auf.

Der jeweilige Mitnehmer 28, 30 wird -startend bei dem entsprechenden Endbereich 60, 62 der Mitnehmeraufnahme 24-zur Bildung des in Transportrichtung formschlüssigen Eingriffs quer zur Transportrichtung in die nutartige Mitnehmeraufnahme 24 eingebracht, genauer gesagt eingeschwenkt. Entlang des Einbring- bzw. Einschwenkwegs verjüngt sich die Kontur der Mitnehmeraufnahme 24 in dem entsprechenden Abschnitt in Einbring- oder Einschwenkrichtung. Dadurch wird der Mitnehmer 28, 30 in der Mitnehmeraufnahme 24 zur Bildung des in Transportrichtung formschlüssigen Eingriffs regelrecht eingefangen. Die sich auf dem Weg verjüngende Kontur bildet dazu Auflaufschrägen, die einerseits für diesen Formschluss sorgen, den Werkstückträger 12 aber gleichzeitig auch in Transportrichtung ausrichten.

Die Mitnehmeraufnahme 24 ist an der engsten Stelle 60 der Verjüngung schmaler als der Mitnehmer 28, 30 bzw. der in den Eingriff bringbare Teil dieses Mitnehmers 28, 30. Der Schlitten 54 wird in axialer Richtung leicht ausgelenkt. Dabei kommt es jedoch mit Sicherheit zu einem in Transportrichtung formschlüssigen Eingriff des Mitnehmers 28, 30 in die Aufnahme 24. Die Verjüngung bildet also eine Auflaufstruktur, die bis zum Auflaufen auf den Teil der sich verjüngenden Kontur, der schmaler ist als der in Eingriff bringbare Teil des Mitnehmers 28, 30, ein Zentrieren des Werkstückträgers 12 bewirkt. Gleichzeitig liegt der Mitnehmer 28, 30 in Transportrichtung formschlüssig und spielfrei an beiden die Kontur bildenden Flanken der Mitnehmeraufnahme 24 an und wird durch die Rückstellkraft des Rückstellelements oder der Rückstellelemente 56, 58 in dieser Position gehalten.

Die Fig. 4 zeigt schließlich den Vorschubantrieb 14 und den Werkstückträger 12 der Werkstücktransportvorrichtung 10 noch einmal im Detail. Deutlich erkennbar sind beide Mitnehmerleisten 36, 38 mit den als nach oben vorstehende Zapfen ausgebildeten Mitnehmern 28, 32. Die Mitnehmerleisten 36, 38 werden über den gemeinsamen Schwenkantrieb 40 angetrieben, um die Mitnehmerreihen 32, 34 in der vorstehend beschriebenen Weise entlang einer Kreisbahn quer zur Transportrichtung zu verschwenken. Dazu sind die Mitnehmerleisten 36, 38 mittels Führungsblöcken 42 auf einer Schwenkwelle 44 angeordnet, wobei die Führungsblöcke 42 auf der Schwenkwelle 44 drehfest, jedoch axial verschieblich, gehalten werden. Um die komplette Antriebsbewegung zu erhalten wird die Schwenkwelle 44 alternierend in beiden Schwenkrichtungen von dem Drehantrieb des Vorschubantriebs 14 angetrieben.

Unter einem Mitnehmersystem 70 für eine Werkstücktransportvorrichtung 10 ist im Zusammenhang mit der vorliegenden Erfindung ein System zu verstehen, das einen antreibbaren Mitnehmer und einen Werkstückträger 12 mit einer Mitnehmeraufnahme 24 aufweist. Mit anderen Worten umfasst das Mitnehmersystem 70 den Werkstückträger 12 und zumindest einen Mitnehmer 24, der angetrieben oder zumindest antreibbar ist und zum Transport beziehungsweise zur Mitnahme des Werkstückträgers 12 in dessen Mitnehmeraufnahme eingebracht ist oder zumindest einbringbar ist.

**Bezugszeichenliste**

| | |
|---|---|
| Werkstücktransportvorrichtung | 10 |
| Werkstückträger | 12 |
| Vorschubantrieb | 14 |
| Führungsbahn | 16 |
| Pfeil | 18 |
| Führungsschiene | 20 |
| Führungsschiene | 22 |
| Mitnehmeraufnahme | 24 |
| Längsachse | 26 |
| Mitnehmer | 28 |
| Mitnehmer | 30 |
| Mitnehmerreihe | 32 |
| Mitnehmerreihe | 34 |
| Mitnehmerleiste | 36 |
| Mitnehmerleiste | 38 |
| Schwenkantrieb | 40 |
| Führungsblock | 42 |
| Schwenkwelle | 44 |
| Grundkörper | 46 |
| Aufnahmevorrichtung | 48 |
| Führungselement | 50 |
| Rolle | 52 |
| Schlitten | 54 |
| Rückstellelement | 56 |
| Rückstellelement | 58 |
| Endbereich | 60 |
| Endbereich | 62 |
| Engste Stelle | 64 |
| Abschnitt | 66 |
| Abschnitt | 68 |
| Mitnehmersystem | 70 |

## Patentansprüche

1. Werkstückträger (12) für eine Werkstücktransportvorrichtung (10), der mittels eines Mitnehmers (28, 30) von einem Vorschubantrieb (14) der Werkstücktransportvorrichtung (10) auf einer Führungsbahn (16) in Transportrichtung bewegbar ist, wobei der Werkstückträger (12) eine quer zur Transportrichtung verlaufende nutartige Mitnehmeraufnahme (24) aufweist, in die der Mitnehmer (28, 30) zur Bildung eines in Transportrichtung formschlüssigen Eingriffs quer zur Transportrichtung einbringbar ist, wobei sich die Kontur der Mitnehmeraufnahme (24) in zumindest einem Abschnitt (66, 68) in Einbringrichtung verjüngt,
**gekennzeichnet durch**
einen Schlitten (54), der werkstückträgerintern entlang einer quer zur Transportrichtung verlaufenden Achse (26) linear verfahrbar gelagert ist und die Mitnehmeraufnahme (24) ausbildet, und ein Rückstellelement (56, 58) zur Ausübung einer der Einbringrichtung des Mitnehmers (28, 30) entgegengesetzten Rückstellkraft auf den Schlitten (54).

2. Werkstückträger nach Anspruch 1, mit einem auf den Schlitten (54) wirkenden weiteren Rückstellelement(58, 56), das dem einen Rückstellelement (56,58) axial entgegenwirkt.

3. Werkstückträger nach Anspruch 1 oder 2, wobei das eine Rückstellelement und/oder das andere Rückstellelement (56,58) ein Federelement, insbesondere eine Druckfeder, ist.

4. Werkstückträger nach einem der Ansprüche 1 bis 3, wobei die mindestens eine Verjüngung der Kontur der Mitnehmeraufnahme (24) eine kontinuierlich verlaufende Verjüngung ist.

5. Werkstückträger nach einem der Ansprüche 1 bis 4, wobei die Kontur der Mitnehmeraufnahme (24) zwei Abschnitte (66, 68) mit gegenläufigen Verjüngungen aufweist.

6. Werkstückträger nach einem der Ansprüche 1 bis 5, wobei das Einbringen des Mitnehmers (28, 30) in die Mitnehmeraufnahme (24) ein Einschwenken ist.

7. Mitnehmersystem (70) für eine Werkstücktransportvorrichtung (10), wobei das Mitnehmersystem (70) einen von einem Vorschubantrieb (14) der Werkstücktransportvorrichtung (10) antreibbaren Mitnehmer und einen Werkstückträger (12) aufweist,
**dadurch gekennzeichnet,**
**dass** der Werkstückträger (12) als Werkstückträger (12) nach mindestens einem der vorhergehenden Ansprüche ausgebildet ist.

8. Mitnehmersystem nach Anspruch 7, wobei die Mitnehmeraufnahme (24) an der engsten Stelle (64) der Verjüngung schmaler ist, als der in den formschlüssigen Eingriff bringbare Teil des Mitnehmers (28, 30).

9. Werkstücktransportvorrichtung (10) mit einer Führungsbahn (16), einem Vorschubantrieb (14) und Werkstückträgern (12), die zur taktweisen Förderung auf der Führungsbahn (16) angeordnet sind, **gekennzeichnet durch** mindestens ein Mitnehmersystem (70) nach Anspruch 7 oder 8.

10. Werkstücktransportvorrichtung nach Anspruch 9, wobei die mehreren Mitnehmer (28, 30) des Vorschubantriebs (14) in zwei Mitnehmerreihen (32, 34) jeweils in der Transportrichtung fluchtend hintereinander angeordnet sind.

11. Werkstücktransportvorrichtung nach Anspruch 10, wobei die beiden Mitnehmerreihen (32, 34) zum einen quer zur Transportrichtung für einen einander abwechselnden Eingriff ihrer Mitnehmer (28, 30) in die Mitnehmeraufnahmen (24) der Werkstückträger (12) beweglich und zum anderen entweder in der Eingriffslage ihrer Mitnehmer (28, 30) in der Transportrichtung oder in der Position außer Eingriff ihrer Mitnehmer (28, 30) von den Mitnehmeraufnahmen (24) der Werkstückträger (12) entgegen der Transportrichtung jeweils um eine gleiche Weglänge verfahrbar sind.

12. Werkstücktransportvorrichtung nach Anspruch 10 oder 11, wobei der Abstand der Mitnehmer (28, 30) in den Mitnehmerreihen (32, 34) größer ist als die Länge der Werkstückträger (12) in Transportrichtung.
